# DEMANDE DE BREVET EUROPEEN

(11) **EP 0 954 149 A1**
(43) Date de publication de la demande: **03.11.1999**
(21) Numéro de dépôt: 99201264.1
(22) Date de dépôt: 21.04.1999
(51) Int. Cl.: H04M 1/00, H04M 1/72

(54) **Procédé d'accès au menu de la base d'un téléphone sans fil à partir d'un combiné dudit téléphone, avec sélection de la langue d'accès**

(30) Priorité: 30.04.1998 FR 9805469
(71) Demandeur: Koninklijke Philips Electronics N.V., 5621 BA Eindhoven (NL)
(72) Inventeur: Muller, Nicolas, 75008 Paris (FR)
(74) Mandataire: Chaffraix, Jean

(57) **Abrégé**

L'invention concerne un équipement téléphonique sans fils comportant au moins une station de base et un combiné. La station de base est dotée d'un menu d'exploitation dans diverses langues. Le combiné peut accéder au menu d'exploitation de la station de base en établissant un lien propriétaire avec la base. Un code de sélection de la langue d'accès à ce menu est indiqué lors de ces accès.

De façon avantageuse, cette langue d'accès est automatiquement déterminée par la langue du menu local d'exploitation du combiné.

Application: téléphonie sans fils; norme DECT notamment

## Description

L'invention concerne un équipement téléphonique comportant au moins une base dotée d'un menu d'exploitation dit menu distant, et un combiné doté d'un menu d'exploitation dit menu local et de moyens d'accès audit menu distant.

L'invention concerne également un combiné et un procédé d'accès à un menu d'exploitation qui sont destinés à être utilisé dans un tel équipement.

L'invention a d'importantes applications dans le domaine de la téléphonie sans fil.

Un tel équipement est commercialisé par la société Philips Consumer Communications sous la marque "Xalio", et son fonctionnement est décrit dans le mode d'emploi utilisateur intitulé "Philips User Manual: Xalio" publié en 1996. La station de base de ce téléphone ne comportant ni écran ni clavier, son menu d'exploitation, appelé ici menu distant, est accessible à l'utilisateur à partir des combinés. Pour cela, chaque combiné propose à l'utilisateur un menu apparent qui regroupe en fait le menu distant de la station de base (qui est constitué par les options intitulées "base setup", "remove", et "subsc mode" dans le mode d'emploi), et le menu local du combiné (qui est constitué par les options intitulées "phonebook", "SOS", "HS Setup" et "subscribe" dans le mode d'emploi). La langue utilisée dans la station de base et dans les combinés est configurée en usine en fonction du pays dans lequel ils seront commercialisés. Lors d'un accès au menu distant à partir d'un combiné, les informations transmises par la station de base sont transmises dans la langue dans laquelle la station de base a été configurée.

Or, d'une façon générale, il se peut que le menu d'exploitation de la base soit dans une langue différente de celle du menu local d'un combiné (soit parce que l'on utilise ensemble une base et des combinés de provenances différentes qui ont été configurés une fois pour toute en usine, soit parce que l'utilisateur a utilisé une possibilité qui lui était offerte de configurer individuellement les langues de fonctionnement des différentes parties de son équipement).

Il en résulte une situation gênante et désagréable pour l'utilisateur du combiné qui est habitué à utiliser son téléphone dans la langue du menu local.

L'invention a pour but d'apporter une solution à ce problème. Pour cela, un équipement téléphonique selon l'invention et tel que défini dans le paragraphe introductif est caractérisé en ce que la station de base comporte des moyens de mémorisation dudit menu distant dans diverses langues, et en ce que les moyens d'accès du combiné comportent des moyens de sélection d'une langue d'accès audit menu distant.

De même un combiné selon l'invention et tel que défini dans le paragraphe introductif est caractérisé en ce que ladite station de base comportant des moyens de mémorisation dudit menu distant dans diverses langues, les moyens d'accès dudit combiné comportent des moyens de sélection d'une langue d'accès audit menu distant.

Enfin, un procédé selon l'invention et tel que défini dans le paragraphe introductif est caractérisé en ce que, ladite station de base comportant des moyens de mémorisation dudit menu distant dans diverses langues, il comporte une étape de sélection d'une langue d'accès audit menu distant.

L'invention permet à chaque combiné de l'équipement d'accéder au menu distant dans la langue de son choix. Elle est particulièrement intéressante dans les pays dans lesquels il existe plusieurs langues officielles, et donc dans lesquels il est très probable de trouver dans un même équipement des combinés dont les menus locaux sont dans différentes langues.

Dans un mode de réalisation avantageux de l'invention, la langue d'accès d'un combiné audit menu distant est déterminée automatiquement par la langue du menu local dudit combiné. Ce mode de réalisation présente l'avantage suivant: la sélection de la langue d'accès au menu distant ne nécessite aucune opération spécifique de la part de l'utilisateur. De plus, aucune configuration de langue n'est plus nécessaire en usine au niveau de la station de base.

On notera que le problème de la langue dans laquelle l'utilisateur d'un terminal de télécommunication accède à une information qui n'est pas locale a déjà été abordé dans d'autres domaines des télécommunications. Par exemple, dans l'abrégé de brevet japonais n°08289024, il a été décrit un réseau de radio - messagerie dans lequel des équipements du réseau sont susceptibles d'émettre des messages de service à destination des terminaux, et l'utilisateur d'un terminal peut saisir un code de sélection de la langue dans laquelle il souhaite recevoir ces messages de service.

L'invention sera mieux comprise et d'autres détails apparaîtront dans la description qui va suivre en regard des dessins annexés qui sont donnés à titre d'exemple non limitatif et dans lesquels:
- la figure 1 représente schématiquement un exemple de téléphone selon l'invention,
- la figure 2 représente un procédé d'accès d'un combiné au menu d'exploitation d'une station de base.

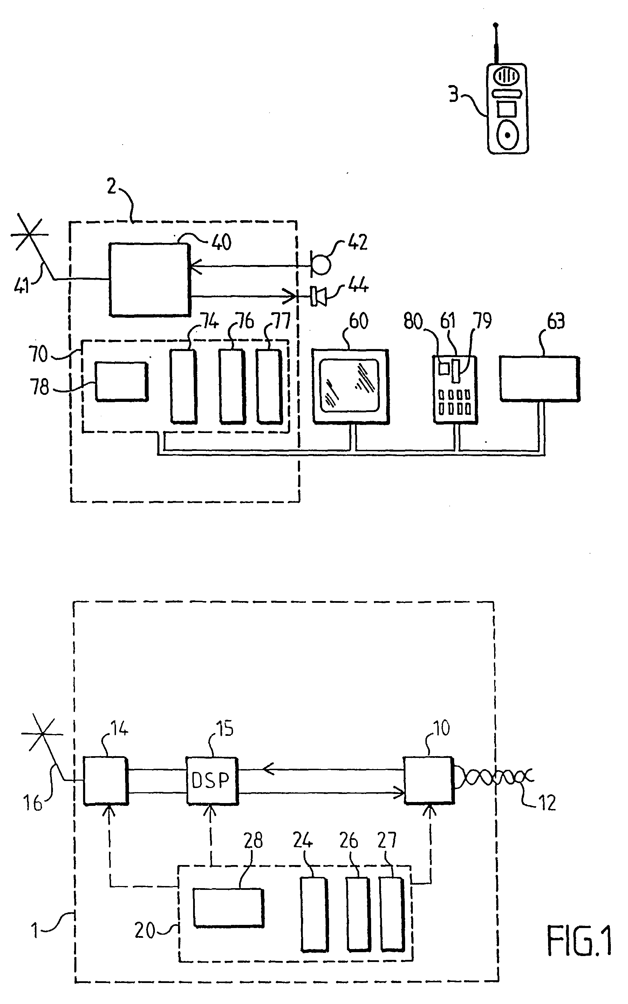

Sur la figure 1, le téléphone sans fil représenté est un téléphone répondant aux normes DECT. La référence 1 montre une station de base à laquelle un ou plusieurs dispositifs de combiné 2, 3, ... sont rattachés par voie radioélectrique. Cette station de base 1 comporte notamment un circuit de ligne 10 qui lui permet d'être raccordée au circuit commuté via une ligne téléphonique 12 et un circuit radioélectrique 14 qui autorise le dialogue avec les différents combinés 2, 3, ..., en émettant et en recevant des ondes par l'intermédiaire d'une antenne 16. Les circuits 10 et 14 sont reliés par l'intermédiaire d'un circuit 15 de traitement du signal formé autour d'un processeur de signal DSP. Tous ces éléments de la station de base 1 sont gérés par un ensemble à microprocesseur 20, qui, de façon usuelle, est notamment composé d'une mémoire vive 24, d'une mémoire morte 26 contenant des instructions de fonctionnement de l'appareil, d'une mémoire non volatile 27 (par exemple, une mémoire EEPROM ou une mémoire FLASH) et d'un processeur de gestion 28. La mémoire non volatile 27 contient notamment un menu d'exploitation de la station de base dans diverses langues.

Seul un dispositif de combiné 2 est représenté en détail sur la figure 1, les autres dispositifs de combiné pouvant être de structure identique. Il comporte un ensemble de communication 40 muni d'une antenne 41 qui lui permet de communiquer avec la station de base 1. Cet ensemble traite les informations en provenance du microphone 42, et fournit aussi des signaux pour un haut-parleur 44. Le combiné 2 comporte aussi un écran d'affichage 60, un clavier 61, et une batterie d'alimentation 63. Un organe de gestion 70 est également prévu. Comme l'organe 20, il est doté d'une mémoire vive 74, d'une mémoire morte 76 contenant des instructions de fonctionnement, d'une mémoire non volatile 27 et d'un processeur de gestion 78. La mémoire non volatile 77 contient notamment un menu d'exploitation de la station de base dans au moins une langue.

L'écran 60 permet notamment d'afficher le menu local du combiné. L'utilisateur se déplace dans le menu à l'aide de touches de navigation 79 prévues sur le clavier 61, et il sélectionne des options dans ce menu à l'aide d'une touche de sélection 80. Le menu local d'un combiné permet notamment de configurer le combiné (choix de différents paramètres propres au combiné tels que le type et le volume de la sonnerie, la langue du menu local lorsque plusieurs langues sont disponibles; programmation du répertoire du combiné...).

Chaque combiné peut de plus accéder au menu de la station de base, dit menu distant. Ce menu permet de régler des paramètres qui sont propres à la station de base tels que le type et le volume de la sonnerie de la station de base, ainsi que des paramètres qui sont communs à tous les combinés, par exemple le type de numérotation (qui dépend du pays dans lequel l'équipement est utilisé). La base ne comportant en général pas de clavier ni d'écran, l'accès à ce menu se fait à partir de l'un quelconque des combinés.

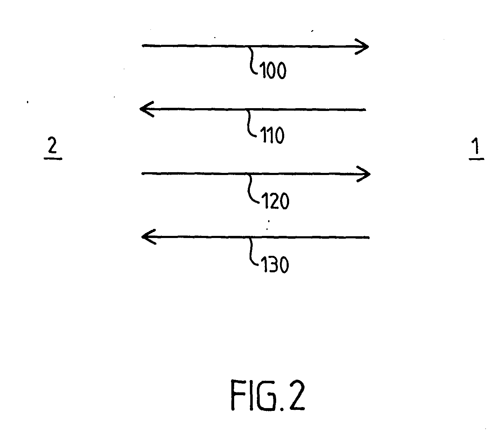

On va maintenant décrire en regard de la figure 2 le mécanisme d'accès au menu distant de la base par l'un des combinés de l'équipement téléphonique. Ce mécanisme d'accès utilise les liens propriétaires prévus par la norme DECT (ETS 300175-5; part 5 "Network interface") pour transmettre des informations quelconques (autres que celles spécifiquement décrites dans la norme) entre un combiné et la base. Conformément à la norme DECT, et en reprenant la même terminologie, un lien propriétaire est par exemple établi de la façon suivante:
- à l'étape 100 le combiné envoie vers la station de base un message {CC-SETUP} dont l'élément d'information 〈〈BASIC-SERVICE〉〉 indique un "service call setup" (pour plus de précisions on se reportera aux paragraphes 9.3.1.1 cas D, 6.3.2.1 et 7.6.4 de la partie 5 de la norme);
- la station de base répond à l'étape 110 en renvoyant un message {CC-SETUP-ACK} (paragraphe 6.3.2.3 de la partie 5 de la norme);
- un lien propriétaire étant ainsi établi entre le combiné et la base, le combiné envoie à l'étape 120 un message {CC-INFO} qui contient notamment un élément d'information 〈〈"KEYPAD"〉〉 contenant un ou plusieurs caractères correspondant aux appuis touches effectués par l'utilisateur sur le clavier de son combiné. En retour, la station de base envoie à l'étape 130 un message {CC-INFO} qui contient un élément d'information 〈〈"DISPLAY"〉〉 contenant un ou plusieurs caractères à afficher sur l'écran du combiné. Pour plus de détails, on se reportera aux paragraphes 6.3.2.2 et 7.5.5 de la partie 5 de la norme précitée.

Conformément à l'invention, les messages {CC-INFO} envoyés par le combiné à l'étape 120 contiennent un code indicatif de la langue d'accès au menu distant. Ce code est transmis dans l'élément d'information 〈〈"KEYPAD"〉〉, avec les caractères qui correspondent aux appuis touches effectués par l'utilisateur sur le clavier du combiné. De façon avantageuse ce code transmis est celui qui correspond à la langue du menu local de l'équipement.

L'invention n'est pas limitée à la norme DECT dans le cadre de laquelle elle vient d'être décrite.

## Revendications

1. Equipement téléphonique comportant au moins une base dotée d'un menu d'exploitation dit menu distant, et un combiné doté d'un menu d'exploitation dit menu local et de moyens d'accès audit menu distant, caractérisé en ce que la station de base comporte des moyens de mémorisation dudit menu distant dans diverses langues, et en ce que les moyens d'accès du combiné comportent des moyens de sélection d'une langue d'accès audit menu distant.

2. Equipement téléphonique selon la revendication 1, caractérisé en ce que la langue d'accès d'un combiné audit menu distant est déterminée par la langue du menu local dudit combiné.

3. Equipement téléphonique selon la revendication 1, caractérisé en ce que lesdits moyens de sélection comportent des moyens de transmission d'un code indicatif de ladite langue d'accès lors des accès audit menu distant.

4. Combiné téléphonique destiné à être utilisé dans un équipement téléphonique sans fil comportant au moins une station de base dotée d'un menu d'exploitation dit menu distant, ledit combiné étant doté d'un menu d'exploitation dit menu local et de moyens d'accès audit menu distant, caractérisé en ce que ladite station de base comportant des moyens de mémorisation dudit menu distant dans diverses langues, les moyens d'accès dudit combiné comportent des moyens de sélection d'une langue d'accès audit menu distant.

5. Combiné selon la revendication 4, caractérisé en ce que la langue d'accès audit menu distant est déterminée par la langue du menu local dudit combiné.

6. Combiné selon la revendication 4, caractérisé en ce que lesdits de sélection comportent des moyens de transmission d'un code indicatif de ladite langue d'accès lors des accès audit menu distant.

7. Procédé d'accès à un menu d'exploitation, mis en oeuvre dans un équipement téléphonique comportant au moins une station de base et un combiné, ladite station de base étant dotée d'un menu d'exploitation dit menu distant, et ledit combiné étant doté d'un menu d'exploitation dit menu local, pour permettre audit combiné d'accéder audit menu distant, caractérisé en ce que, ladite station de base comportant des moyens de mémorisation dudit menu distant dans diverses langues, il comporte une étape de sélection d'une langue d'accès audit menu distant.

8. Procédé d'accès selon la revendication 7, caractérisé en ce que la langue d'accès audit menu distant est déterminée par la langue du menu local dudit combiné.

9. Procédé d'accès selon la revendication 7, caractérisé en ce que ladite étape de sélection comporte une étape de transmission d'un code indicatif de ladite langue d'accès lors des accès audit menu distant.
